(19) Europäisches Patentamt
European Patent Office
Office européen des brevets

(11) **EP 2 324 566 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(21) Anmeldenummer: **09777933.4**

(22) Anmeldetag: **18.08.2009**

(51) Int Cl.:
*G01D 1/12* (2006.01)      *H02P 7/28* (2006.01)
*H02P 6/18* (2006.01)      *G01P 3/44* (2006.01)

(86) Internationale Anmeldenummer:
**PCT/EP2009/005965**

(87) Internationale Veröffentlichungsnummer:
**WO 2010/028736 (18.03.2010 Gazette 2010/11)**

(54) **VERFAHREN UND VORRICHTUNG ZUR VERARBEITUNG EINES STROMRIPPEL AUFWEISENDEN MOTORSIGNALS EINES GLEICHSTROMMOTORS**

METHOD AND DEVICE FOR PROCESSING A MOTOR SIGNAL OF A DC MOTOR, HAVING CURRENT RIPPLES

PROCÉDÉ ET DISPOSITIF DE TRAITEMENT D'UN SIGNAL D'UN MOTEUR À COURANT CONTINU PRÉSENTANT DES ONDULATIONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.09.2008 DE 102008047094**
**20.03.2009 DE 102009014264**

(43) Veröffentlichungstag der Anmeldung:
**25.05.2011 Patentblatt 2011/21**

(73) Patentinhaber: **Brose Fahrzeugteile GmbH & Co. Kommanditgesellschaft, Hallstadt**
**96103 Hallstadt (DE)**

(72) Erfinder:
• **KNEZEVIC, Jovan**
**96047 Bamberg (DE)**
• **ÜBEL, Wolfgang**
**96479 Weidramsdorf (DE)**
• **FUCHS, Thorsten**
**93106 Hallstadt (DE)**
• **RUSS, Detlef**
**96237 Ebersdorf (DE)**
• **DIESTLER, Stefan**
**91364 Unterleinleiter (DE)**

(74) Vertreter: **FDST Patentanwälte**
**Nordostpark 16**
**90411 Nürnberg (DE)**

(56) Entgegenhaltungen:
DE-A1- 10 028 038      DE-C1- 19 511 307
US-A- 5 048 115      US-A1- 2004 098 213
US-A1- 2008 100 245

EP 2 324 566 B1

**Beschreibung**

Die Erfindung bezieht sich auf ein Verfahren und eine Vorrichtung zur Verarbeitung eines Motorsignals eines Gleichstrommotors, gemäß dem Oberbegriff des Anspruchs 1 bzw. 9. Ein derartiges Verfahren bzw. eine derartige Vorrichtung sind beispielsweise aus der US 5,048,115 A bekannt, das als nächstliegender Stand der Technik angesehen wird.

Ein auch als Kommutatormotor bezeichneter Gleichstrommotor ist ein permanent erregter Elektromotor, dessen Motor- oder Ankerstrom infolge der Kommutierung einen auch als Stromwelligkeit oder Stromrippel bezeichneten Wechselstromanteil enthält, der einem Gleichstromanteil überlagert ist. Ein solcher Gleichstrommotor wird insbesondere auch bei einem Verstellantrieb, beispielsweise bei einem Fensterheber-, Schiebedach- oder Heckklappenantrieb, eines Kraftfahrzeugs eingesetzt. In dieser Anwendung ist es von erheblicher Bedeutung, mit einfachen Mitteln eine zuverlässige Ermittlung der Motor- oder Ankerstellung und damit eine präzise Positionsbestimmung des motorisch angetriebenen Verstellteils (Stellelement) zu ermöglichen.

Die Häufigkeit der Stromrippel ist abhängig von der Anzahl der Kommutator- oder Kollektorlamellen des Motorankers. Somit kann aus der Anzahl der Stromrippel in einem Zeitintervall sowohl auf die Drehstellung des Motors - und damit auf die Position eines hiervon angetriebenen Verstellteils - als auch anhand der Frequenz (Rippelfrequenz) des Stromrippelsignals auf die Motordrehzahl geschlossen werden. Dem Motorsignals und damit dem die Stromrippel enthaltenden Nutzsignal sind jedoch insbesondere hochfrequente Störsignale überlagert. Auch vergleichsweise niederfrequente Störungen, die sich auf den Verlauf des dem Stromrippel unterlagerten Gleichsignalanteils auswirken und im Wesentlichen auf den betriebsbedingt schwankenden Kraft- oder Drehmomentverlauf des Motors zurückzuführen sind, sind bei einer Auswertung der Stromrippel zu berücksichtigen.

Bei einer aus der DD 254 254 A1 bekannten Schaltungsanordnung zur Erzeugung einer drehzahlproportionalen Impulsfolge bei Gleichstrom-Kommutatormotoren wird ein an einem Strom-Spannungs-Wandler in Form eines ohmschen Widerstandes abgegriffenes Motorsignal einem spannungsgesteuerten Hochpassfilter und einem nachgeschalteten spannungsgesteuerten Tiefpassfilter zur Realisierung eines schmalbandigen Bandpasses zugeführt, an dessen Ausgang eine drehzahlproportionale Impulsfolge erzeugt wird.

Aus der US 4,924,166 ist es darüber hinaus bekannt, zur Bearbeitung der im Ankerstrom eines Gleichstrommotors erzeugten Stromrippel als steuerbaren Filter eine Phasenregelschleife (phase locked loop) mit einem Phasenvergleicher und einem diesem über einen Tiefpass nachgeschalteten steuerbaren Oszillator (VCO) einzusetzen. Dem Phasenvergleicher wird eingangsseitig das tiefpassgefilterte Motorsignal zugeführt, während dessen Oszillator mit einem aus der elektromotorischen Kraft (EMK) abgeleiteten Signal angesteuert wird. Dem Signaleingang der Phasenregelschleife wird hierzu über einen Tiefpassfilter das an einem Shunt abgegriffene Ankerstromsignal direkt zugeführt, während das Steuersignal für den Oszillator der Phasenregelschleife aus der Differenz zwischen der Motorspannung und dem Produkt aus dem Ankerwiderstand und dem Ankerstrom als so genanntes back-e.m.f.-Signal (back electromotive force oder Gegeninduktionsspannung) zugeführt wird.

Die Ansteuerung eines einstellbaren Bandpassfilters anhand der induzierten Gegenspannung (EMK-Spannung), die aus der erfassten Motorspannung und dem erfassten Ankerstrom ermittelten wird, ist auch aus der DE 195 11 307 C1 bekannt. Ansonsten wird bei diesem bekannten Verfahren die Frequenzfilterung durch eine Abschätzung der aktuellen Nutzfrequenz (Rippelfrequenz) des Ankerstromsignals derart eingestellt, dass das Durchlassfrequenzband die Nutzfrequenz umfasst sowie oberhalb und/oder unterhalb der Störfrequenzen liegt. Aus dem derart gefilterten Signal werden die relativen Extremwerte (Minimum- und Maximum-Auswertung) ermittelt.

Auch bei einem aus der DE 198 34 108 A1 bekannten Verfahren zur Bestimmung der Anzahl von Motorumdrehungen bei Elektromotoren aus Stromrippeln wird zur Beseitigung hochfrequenter Störungen das Motorstromsignal zunächst einem Tiefpass zugeführt. Die Stromrippel werden wiederum anhand von berechneten Differenzwerten zwischen aufeinander folgenden Minimal- und Maximalwerten des tiefpassgefilterten Motorstromsignals ermittelt.

Bei einer aus der EP 0 579 015 B1 bekannten Schaltungsanordnung zur Erfassung einer drehzahlproportionalen Impulsfolge für einen Gleichstromkommutatormotor ist ein frequenzselektives Filter mit einer entsprechend der Motordrehzahl veränderlichen Grenzfrequenz vorgesehen. Dabei liegt die untere Frequenz bei praktisch unveränderter Motordrehzahl deutlich unter, bei Änderung der Drehzahl jedoch etwa im Bereich der Impulsfolge. Damit soll es möglich sein, vorübergehend ein differenzierendes Verhalten des Bandpasses während Drehzahländerungen zu erreichen und damit auch während dieser Änderungen die Drehlage des Gleichstromkommutatormotors exakt zu bestimmen.

Um einen Frequenzfilter variabel zu gestalten, ist es aus der EP 1 037 052 B1 (DE 600 05 727 T2) bekannt, ein aktives Hochpassfilter (CR-Filter) mit geschalteten Kapazitäten (switched-capaciter-Filter) einzusetzen, um Störungen aus dem Motorsignal zu beseitigen und die Drehzahl aus der Welligkeit eines Gleichstrommotors zu bestimmen. Hierzu werden Kapazitäten mittels eines Taktsignals geschaltet, so dass sich die Filter-Eckfrequenz ändert und ein nachgeordneter Schaltkreis eine Welligkeitsimpulsfolge erzeugt, die auch als Grundlage für die Erzeugung des Taktsignals dient.

In der US 2008/0100245 A1 ist unter dem Kapitel "Back-EMF voltage with position sensing" der Zusammenhang zwischen der EMK und der Rotorgeschwindigkeit des Motors offenbart. Ähnlich dem bereits beschriebenen Verfahren gemäß der US 4,924,166 erfolgt die Weiterverarbeitung des Ankerstroms mittels eines "complex single frequence PLL (Phasenregelschleife)". Es sind insgesamt drei verschiedene Ansätze zur Messung der Motorgeschwindigkeit eines Gleichstrommotors angeführt, von denen sich ein Ansatz auf die Messung der EMK, ein zweiter Ansatz auf die Einzelfrequenzfilterung mittels PLL und der dritte Ansatz auf die Messung der Frequenz der Stromrippel eines bürstenbehafteten Gleichstrommotors bezieht, wobei hierauf näher eingegangen wird.

Der Erfindung liegt die Aufgabe zugrunde, ein besonders geeignetes Verfahren zur Verarbeitung eines Motorsignals (Motor- bzw. Ankerstrom, Motorspannung) eines Gleichstrommotors anzugeben. Auch soll ein möglichst störungsfreies, insbesondere drehzahlproportionales Signal erzeugt werden. Dieses soll zur Positionsbestimmung für eine Verstelleinrichtung eines Kraftfahrzeugs und/oder zur Überschusskraftbegrenzung in einem Einklemmschutzsystem geeignet sein. Des Weiteren solle eine geeignete Vorrichtung zur Verarbeitung eines solchen Motorsignals angegeben werden.

Bezüglich des Verfahrens wird diese Aufgabe erfindungsgemäß gelöst durch die Merkmale des Anspruchs 1. Hierzu werden der Ankerstrom bzw. ein Ankerstromsignal des Gleichstrommotors erfasst und zur Ermittlung der Gegeninduktionsspannung des Gleichstrommotors herangezogen. Zudem wird zur Ermittlung der Gegeninduktionsspannung des Gleichstrommotors zusätzlich die Motorspannung erfasst bzw. ein entsprechendes Motorspannungssignal erzeugt. Anhand der ermittelten Gegeninduktionsspannung wird aus dem Ankerstromsignal ein - insbesondere drehzahlproportionales - Nutzsignal erzeugt.

Das Ankerstromsignal des Gleichstrommotors wird einem steuerbaren, d. h. hinsichtlich dessen Frequenzgang bzw. Grenz- oder Mittenfrequenz bestimmbaren Filterbaustein zugeführt. Das beispielsweise als veränderlicher Bandpass wirksame Frequenzfilter erzeugt anhand der im Ankerstrom bzw. in einem entsprechenden Ankerstromsignal enthaltenen Stromrippel ein drehzahlproportionales Ausgangssignal. Hierzu wird demfrequenzfilter steuerseitig ein aus der Gegeninduktionsspannung ermitteltes drehzahlproportionales Steuersignal und signaleingangsseitig ein Filtereingangssignal zugeführt. Das Filtereingangssignal ist aus dem die Stromrippel enthaltenden Ankerstromsignal und dem mit einer Tiefpasscharakteristik, vorzugsweise mit einer Tiefpassfunktionalität erster Ordnung, gewichteten Motorspannungssignal abgeleitet.

Die Gegeninduktionsspannung wird aus der erfassten Motorspannung und dem aus dem Ankerstromsignal und dem Ankerwiderstand ermittelten Produkt bestimmt. Das Filtereingangssignal ist aus der Differenz zwischen dem Ankerstromsignal (Minuend) und einem aus einem mathematischen Motormodell abgeleiteten Subtrahend gebildet. Dieser steigt zeitlich nach dem Einschalten bzw. Anliegen der Motorspannung mit dieser auf einen Stromwert an, der proportional zum Produkt aus dem Kehrwert des Anker- oder Ankerwicklungswiderstandes und der Motorspannung mit einer Verzögerung (erster Ordnung) ist, wobei die Zeitkonstante durch die Induktion und den Kehrwert des Wicklungswiderstandes gegeben ist. Dieses Verhalten entspricht der Funktion eines Tiefpassfilters erster Ordnung.

Das Nutzsignal wird geeigneterweise einem Tiefpassfilter zugeführt. Dieser kann als digitales Filter mit fester Grenzfrequenz ausgeführt sein. Der entsprechende Tiefpass dient gemäß einer auf die Überkraftbegrenzung gerichteten Variante der Erfindung zusätzlich zur Dämpfung von hochfrequenten Störungen auch zur Entfernung der hochfrequenten Rippel.

Für eine (Drehzahl-)Überschusskraftbegrenzung (Drehzahl-ÜKB) wird die Drehzahl- oder Geschwindigkeitsänderung herangezogen, insbesondere als Eingangsgrößer eines Funktionsbausteins zur Drehzahldifferenzermittlung. Zur Berechnung dient geeigneterweise die erste Ableitung der Gegeninduktionsspannung. Auch kann durch eine geeignete Auswertung von Rippelereignissen (Rippel-Events) die Bildung oder Berechnung der Ableitung derart ausgeführt bzw. genutzt werden, dass im Signal eventuell noch vorhandene Rippel entfernt werden.

Hierzu wird geeigneterweise die Differenzierung nicht anhand zweier benachbarter Wertepaare, sondern vorzugsweise stets im Abstand einer Anzahl n von Rippeln durchgeführt, wobei n der Anzahl der Kommutatornuten ent-spricht. Für einen Abtastwert gilt dann:

$$u1 = E_{ripple\_n} \sin(2\pi ft) + E_1$$

$$u2 = E_{ripple\_n} \sin(2\pi ft + \varphi) + E_2$$

*für*

$$\varphi = 2\pi n$$

$$\Delta E = u2 - u1$$

$$\Delta E = E_2 - E_1$$

Hierdurch werden die durch den Wechselanteil der Rippel bedingten Schwankungen der Gegeninduktionsspannung E entfernt.

In zweckmäßiger Weiterbildung der Variante zur Verarbeitung des Motor- bzw. Ankerstromsignals für eine Positionsbestimmung mit einem steuerbaren Frequenzfilter wird diesem das Nutzsignal nicht direkt, sondern ebenfalls nach vorheriger Tiefpassfilterung als tiefpassgefiltertes Steuersignal zugeführt. Die Tiefpassfilterung des Steuersignals dient zu dessen Glättung für die Frequenzabstimmung und damit zur Stabilisierung des beispielsweise als Bandpassfilter ausgeführten Frequenzfilters.

Geeigneterweise wird das Ankerstromsignal in einem Tiefpassfilter vorgefiltert. Hierdurch werden die für den so genannten Alias-Effekt verantwortlichen hohen Frequenzanteile gedämpft. Ein entsprechendes analoges Tiefpassfilter ist demnach der weiteren Verarbeitung des Ankerstromsignals zur Erzeugung sowohl des Filtereingangssignals als auch des Steuersignals des Frequenzfilters vorgeordnet.

Bezüglich der Vorrichtung wird die genannte Aufgabe erfindungsgemäß gelöst durch die Merkmale des Anspruchs 9. Vorteilhafte Ausgestaltungen und Varianten sind Gegenstand der hierauf rückbezogenen Unteransprüche.

So umfasst die Vorrichtung insbesondere eine Einrichtung zur Erfassung des Verlaufs des Ankerstroms als Ankerstromsignal und der Motorspannung (Motorspannungssignal). Des Weiteren umfasst die Vorrichtung einen Frequenzfilter mit einem Signaleingang und einem Signalausgang sowie mit einem Steuereingang. Dem Steuereingang ist ein erster Funktionsbaustein vorgeordnet, der ein drehzahlproportionales Steuersignal ermittelt. Dem Signaleingang des Frequenzfilters ist ein zweiter Funktionsbaustein mit Tiefpassfunktion vorgeordnet. Diese signaleingangsseitige Tiefpassfunktion wird aus der erfassten Motorspannung sowie aus der Selbstinduktion und der Gegeninduktion des Gleichstrommotors anhand eines Motormodells berechnet.

Zur Ermittlung des Filtereingangssignals wird die Differenz aus dem erfassten Ankerstrom und einem die Tiefpassfunktion enthaltenden Signal gebildet. Das Filtereingangssignal ist hierbei proportional zur Gegeninduktionsspannung mit der Folge, dass aus dem Filtereingangssignal insbesondere aufgrund von Einschaltstromspitzen erzeugte Störfrequenzen herausgefiltert oder zumindest gedämpft sind. Derartige hochfrequente Störanteile infolge von Schaltvorgängen, insbesondere mit Einschaltstromspitzen beim Schalten des Gleichstrommotors, führen bislang zu erheblichen Problemen bei der Filterung der Stromrippel während der Startphase des Gleichstrommotors oder bei ähnlichen hochfrequenten Spannungsstörungen.

Die Funktionalität des dem steuerbaren Frequenzfilter signalseitig vorgeordneten zweiten Funktionsbausteins ist geeigneterweise die Funktionalität eines Tiefpassfilters erster Ordnung, die aus dem mathematischen Motormodell anhand der elektrischen Gleichung des Gleichstrommotors gemäß der Beziehung $Um = R_a \times I_a + L_a \times dI_{a/dt} + E$ abgeleitet ist. Dabei sind Um die Motorspannung, $R_a \times I_a$ das Produkt aus Ankerwiderstand und Ankerstrom des Gleichstrommotors, $L_a \times dI_{a/dt}$ die Selbstinduktion (Selbstinduktionsspannung) mit der Wicklungsinduktivität $L_a$ und $\Delta E$ die Gegeninduktion (Gegeninduktionsspannung) des Gleichstrommotors. Aus dieser Beziehung berechnet sich der Korrektur- oder Subtraktionswert des vom Ankerstromsignal subtrahierten Stromverlaufs, der dem Produkt aus einem die Tiefpassfunktionalität charakterisierenden Faktor und der Motorspannung entspricht.

Nachfolgend werden Ausführungsbeispiele der Erfindung anhand einer Zeichnung näher erläutert. Darin zeigen:

Fig. 1    in einem Blockschaltbild schematisch die Funktionsblöcke einer Vorrichtung zur Verarbeitung eines Ankerstromsignals mittels eines steuerbaren Frequenzfilters,

Fig. 2    in einem Strom-Zeit-Diagramm den Differenzverlauf zwischen dem Ankerstromsignal und einem Korrekturverlauf mit Tiefpasscharakteristik,

Fig. 3    in einem Diagramm gemäß Fig. 2 den Verlauf des Filtereingangssignals und des Filterausgangssignals,

Fig. 4    in einem Diagramm gemäß den Fig. 2 und 3 den Verlauf des ungefilterten und eines tiefpassgefilterten Filtersteuersignals, und

Fig. 5    in einem Blockschaltbild eine Messeinrichtung zur Erfassung und Vorverarbeitung eines Motor- bzw. Ankerstromsignals.

Einander entsprechende Teile sind in allen Figuren mit den gleichen Bezugszeichen versehen.

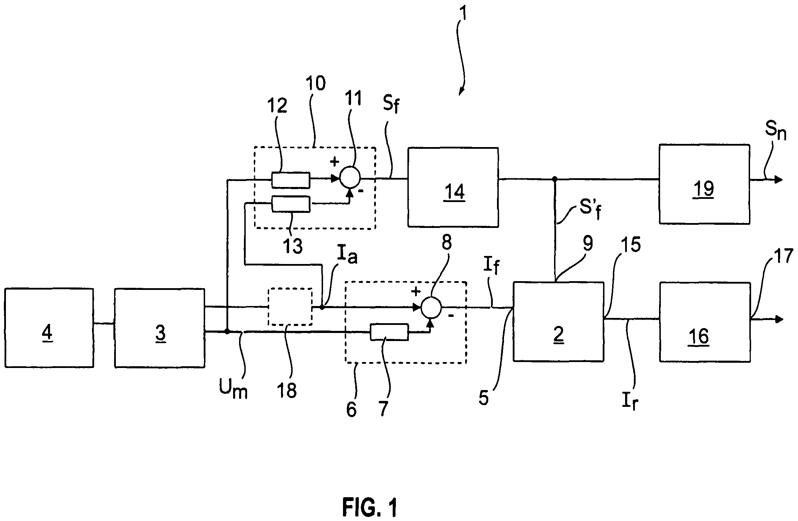

Das in Fig. 1 veranschaulichte Blockschaltbild repräsentiert die Funktionalität eines Verfahrens und einer Vorrichtung zur Ermittlung der in einem Ankerstromsignal $I_a$ eines Gleichstrommotors infolge dessen Kommutierung erzeugten Stromrippel. Diese Stromrippel oder Stromwelligkeiten sind als Wechselsignalanteil dem Gleichstromsignal des Gleichstrommotors überlagert. Da die Anzahl der Kommutatorlamellen des Gleichstrommotors bekannt ist, lässt sich aus der Anzahl der Stromrippel pro Zeiteinheit die Motordrehzahl und die Stellung des Motorankers (Ankerposition) bestimmen. Die Ankerposition oder -stellung wiederum korrespondiert mit der Position eines vom Gleichstrommotor angetriebenen Verstellelementes eines Kraftfahrzeuges. Somit lässt sich mit relativ einfachen Mitteln beispielsweise die Scheibenposition einer mittels eines Fensterheberantriebs automatisch verstellbaren Fensterscheibe eines Kraftfahrzeugs entlang deren Verstellweg zwischen einer oberen Schließstellung und einer unteren Offenstellung genau bestimmen. Die dabei aus der Gegeninduktionsspannung verwendeten Informationen können auch zur Überschusskraftbegrenzung (ÜKB), insbesondere zur Realisierung eines einfachen und zuverlässigen Einklemmschutz, herangezogen werden.

Die Vorrichtung 1 umfasst einen einstellbaren Frequenzfilter 2, vorzugsweise einen abstimmbaren Bandpass, sowie eine Messeinrichtung 3 mit Mitteln zur Erfassung sowohl des Ankerstroms bzw. eines entsprechenden Ankerstromsignals $I_a$ als auch eines - nachfolgend als Motorspannung Um bezeichneten - Motorspannungssignals eines Gleichstrommotors 4.

Die Frequenz $f_{BW}$ des einstellbaren Bandpasses ist bestimmt durch die Beziehung:

$$f_{BW} = n = k \cdot E \qquad\qquad (1),$$

mit

$$E = U_m - R_a \cdot I_a \qquad\qquad (2)$$

Dabei sind E die Gegeninduktionsspannung (Gegen-EMK; engl. back-emf), $U_m$ die Motorspannung, $R_a$ der Wicklungswiderstand der Ankerwicklung des Gleichstrommotors, $I_a$ der nachfolgend als Ankerstromsignal bezeichnete Ankerstrom, k eine Motorkonstante, und n die Motordrehzahl.

Die nachfolgende Gleichung (3) beschreibt das mathematische Modell des Gleichstrommotors.

$$U_m = R_a \cdot I_a + L_a \cdot \frac{dI_a}{dt} + E \qquad\qquad (3)$$

In Gleichung (3) geben die Terme $L_a \cdot dI_a/dt$ die Selbstinduktionsspannung und E die Gegeninduktionsspannung (Gegen-EMK) an, wobei $L_a$ die Wicklungsinduktivität der Ankerwicklung ist.

Hieraus kann gemäß den nachfolgenden Gleichungen (4) bis (5) der Ankerstromverlauf $I_a$ ermittelt werden, wobei s der Laplace-Operator (Laplace-Transformation).

$$\frac{dI_a}{dt} = \frac{1}{L_a}\left(U_m - E - R_a \cdot I_a\right) \qquad\qquad (4)$$

$$L_a \frac{dI_a}{dt} = \left(U_m - E\right) - R_a \cdot I_a \qquad\qquad (4.1)$$

$$L_a \frac{dI_a}{dt} + R_a \cdot I_a = \left(U_m - E\right) \qquad\qquad (4.2)$$

$$\frac{d}{dt} \Leftrightarrow s \qquad\qquad (4.3)$$

$$\frac{dI_a}{dt} \Leftrightarrow sI_a \qquad\qquad (4.4)$$

$$L_a sI_a + R_a \cdot I_a = (U_m - E) \qquad (4.5)$$

$$(L_a s + R_a) \cdot I_a = (U_m - E) \qquad (4.6)$$

$$I_a = \frac{1}{(L_a s + R_a)}(U_m - E) \qquad (4.7)$$

$$I_a = \frac{1}{(R_a + L_a s)}(U_m - E) \qquad (4.8)$$

$$I_a = \frac{1/R_a}{(1 + L_a/R_a * s)}(U_m - E) \qquad (4.9)$$

$$I_a = \frac{1/R_a}{1 + s L_a/R_a}(U_m - E) \qquad (5)$$

$$I_e = \frac{1/R_a}{(1 + sL_a/R_a)}(U_m) \qquad (6)$$

$$I_f = I_a - I_e \qquad\qquad (7)$$

In der Gleichung (5) ist zwar der Term E (Gegen-EMK) unbekannt. Jedoch kann erkanntermaßen diejenige Stromkomponente, die direkt von der angelegten Motorspannung Um erhalten wird, ermittelt werden gemäß der Beziehung nach Gleichung (6).

Anhand der Gleichung (6) ist erkennbar, dass die angelegte (anliegende) Motorspannung Um im Gleichgewichtszustand zu einem nachfolgend auch als Korrektursignal bezeichneten Signalverlauf (Schalt- oder Einschaltstromsignal) $I_e$ gemäß der Beziehung $I_e = U_m/R_a$ mit der Verzögerung (erster Ordnung) und der Zeitkonstanten $T_a = L_a/R_a$ führt. Dies entspricht der Filtercharakteristik eines Tiefpassfilters erster Ordnung.

Gemäß der Beziehung nach Gleichung (7) lässt sich durch Differenzbildung ein Filtereingangssignal $I_f$ ermitteln, dass einem Signaleingang 5 des Frequenzfilters 2 zugeführt wird. Hierzu ist ein (zweiter) Funktionsbaustein (Funktionsblock) 6 mit einem Multiplizierer 7 und mit einer Subtraktionsstufe 8 dem Frequenzfilter 2 signaleingangsseitig vorgeordnet. Im Funktionsbaustein 6 werden der Subtraktionsstufe 8 das erfasste Ankerstromsignal $I_a$ direkt und die Motorspannung Um über den Multiplizierer 7 zugeführt, in dem eine Wichtung der gemessenen Motorspannung Um mit dem aus Gleichung (6) resultierenden Faktor

$$A = \frac{1/R_a}{\left(1 + sL_a/R_a\right)}$$

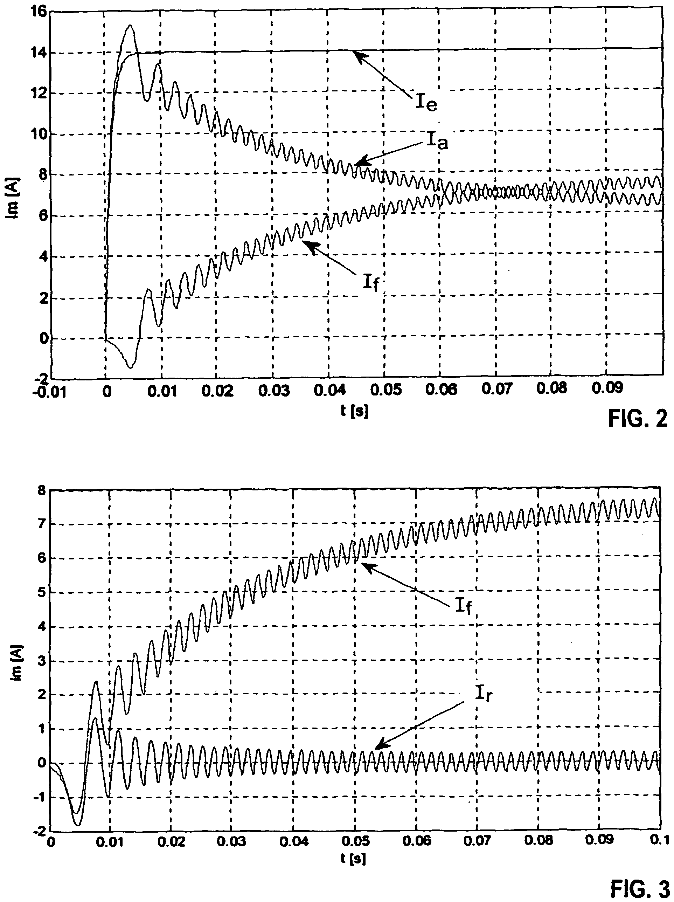

erfolgt. Dieser Term entspricht einem Tiefpass bzw. einer Tiefpassfunktionalität erster Ordnung und bildet daher einen tiefpasscharakteristischen Faktor A. Das gewichtete Signal $A \cdot U_m$ wird in der Subtraktionsstufe 8 gemäß Gleichung (7) vom erfassten Ankerstromsignal $I_a$ subtrahiert. Das Differenzsignale $I_f$, dessen typischer Verlauf in den Figuren 2 und 3 veranschaulicht ist, wird dem Frequenzfilter 2 als Filtereingangssignal $I_f$ zugeführt.

Das einem Steuereingang 9 des Filterbausteins 2 zu dessen Frequenzbestimmung bzw. Grenz- oder Mittenfrequenzeinstellung zugeführte Nutz- oder Steuersignal $S_f$ (back-emf-signal) wird gemäß der Beziehung nach den Gleichungen (1) bis (2), insbesondere nach der nach der Gegeninduktionsspannung E umgestellten Gleichung (3) gemäß der Beziehung E = Um - $R_a$ x $I_a$ + $L_a$ x $dI_a$/dt durch Differenzbildung in einem weiteren (ersten) Funktionsbaustein 10 ermittelt, dem ebenfalls sowohl das Ankerstromsignal $I_a$ als auch die Motorspannung Um zugeführt sind.

Der Funktionsbaustein 10 umfasst wiederum eine Subtraktionsstufe 11. Zur Multiplikation sowohl der Motorspannung Um mit dem Faktor p/K als auch des Ankerstromsignal $I_a$ mit den Faktoren p/K bzw. p/k · $R_a$ gemäß den Beziehungen $S_f$ = $f_{BW}$ = n · p = k · E und analog zu den Gleichungen (1) und (2) folgend $S_f$ = p/k · $U_m$ - p/k · $R_a$ · $I_a$ sind jeweils ein Multiplizierer 12, 13 vorgesehen. Dabei ist p die Pol- oder Kommutatorlamellen- bzw. -nutenzahl des Motors 4.

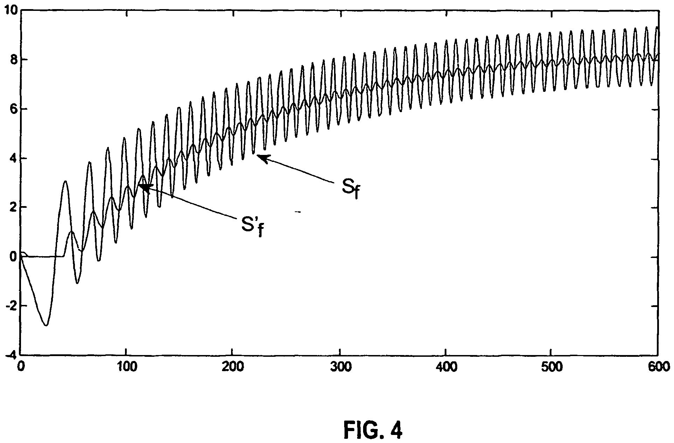

Das an diesem (ersten) Funktionsbaustein 10 ausgangsseitig abgreifbare Ausgangssignal $S_f$ ist in Fig. 4 veranschaulicht. Dieses Signal $S_f$ wird einem Tiefpassfilter 14 zugeführt, der ausgangsseitig das in Fig. 4 ebenfalls veranschaulichte Steuersignal $S'_f$ liefert. Dieses tiefpassgefilterte Steuersignal $S'_f$ wird dem Steuereingang 9 des Filterbausteins 2 zugeführt.

Das infolge der Frequenzfilterung generierte und an einem Signalausgang 15 des Frequenzfilters oder Bandpasses 2 abgreifbare drehzahlproportionale Ausgangssignal (Rippelsignal) $I_r$ ist in Fig. 2 veranschaulicht. Fig. 2 zeigt zudem das (auch in Fig. 1 veranschaulichte) aus der Gegeninduktionsspannung abgeleitete und dabei tiefpassgefilterte Filtereingangssignal $I_f$.

Die Stromkomponente gemäß Gleichung (7) ist für die Motordrehung verantwortlich. Aus den Gleichungen (5) bis (7) ist erkennbar, dass die Gegeninduktionsspannung unbekannt und somit aus Gleichung (7) nicht ableitbar ist. Daher ist die Stromkomponente $I_s$ proportional zur Gegeninduktionsspannung. Diese Stromkomponente enthält somit auch keine hochfrequenten Einschaltstromspitzen, die eine zuverlässige Filterung der Stromrippel aus dem Ankerstromsignal $I_a$ äußerst schwierig oder sogar unmöglich machen würde.

Zudem ist erkennbar, dass die Komponenten $I_f$ praktisch bis zu demjenigen Zeitpunkt null ist, zu dem der Gleichstrommotor 4 die Haftreibung (static friction) überwunden hat. Dies ist ebenfalls aus Fig. 1 erkennbar. Diese Tatsache sowie der Aspekt, dass die Motorspannung Um im Filtereingangssignal $I_f$ und somit in der Filteroperation des Filterbausteins 2 enthalten ist, erhöht die Genauigkeit der Rippelzählung beim sogenannten ripple-counting. Hierzu ist dem Filterbaustein 2 ein Funktionsbaustein (Digitalisierungsbaustein) 16 zur Digitalisierung des Ausgangssignals $I_r$ nachgeschaltet. An diesem Digitalisierungsbaustein 16 ist ausgangsseitig die Information bezüglich der (relativen) Position eines Verstellelementes eines Kraftfahrzeugs an einem Zählerausgang 17 abgreifbar.

Die Einbindung oder Berücksichtigung der Motorspannung Um in das Filtereingangssignal $I_f$ einerseits sowie in das Steuersignal $S_f$ des Filterbausteins 2 andererseits berücksichtigt die wichtigen Informationen zum Schalt- bzw. Einschaltzustand oder anderen, sich in der Motorspannung Um widerspiegelnden Motorstöreinflüssen.

Die zusätzliche Tiefpassfilterung des in dem (ersten) Funktionsbaustein 10 ermittelten Nutz- oder Steuersignals $S_f$ vermeidet eine fehlerhafte Abstimmung der Filterfrequenz des Bandpassfilters 2, so dass praktisch jeder vorhandene Stromrippel auch erfasst wird. Durch diese Tiefpassfilterung wird die Steuerfrequenz des Steuersignals $S_f$ geglättet und die Filterfunktion des Bandpassfilters 2 stabilisiert.

Anstelle einer klassischen Bandpassfunktionalität des Filterbausteins 2 kann dieser auch mit einem Hochpassfilter und mit einem Tiefpassfilter derart aufgebaut sein, dass die Grenzfrequenz der Hochpassfunktionalität praktisch unverändert oder statisch ist, während lediglich die (obere) Grenzfrequenz der Tiefpasscharakteristik anhand des Steuersignals $S'_f$ veränderlich ist. Der Filterbaustein 2 weist somit zweckmäßigerweise einen kombinierten einstellbaren Tiefpass und festen Hochpass auf.

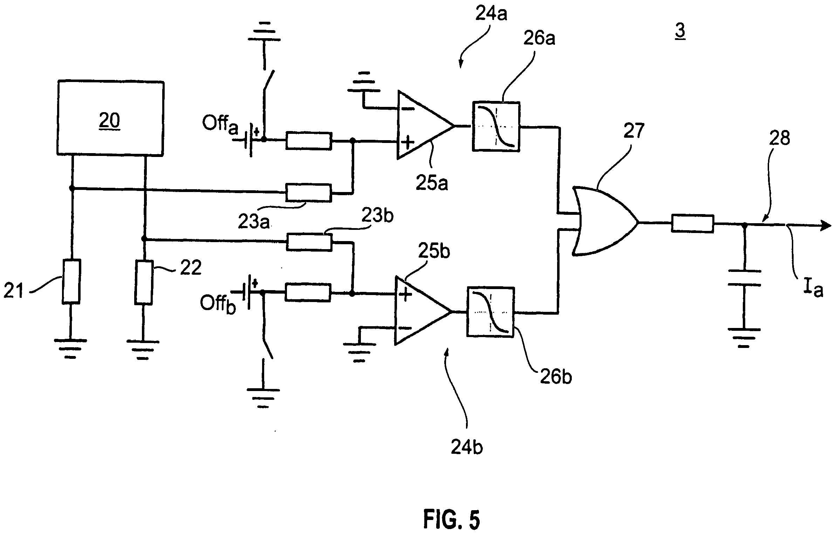

Das Ankerstromsignal $I_a$ wird in einem Tiefpassfilter (Antialiasing-Filter) vorgefiltert, so dass die für den Alias-Effekt verantwortlichen hohen Frequenzanteile gedämpft werden. Ein entsprechendes analoges Antialiasing-Filter 18 ist zur weiteren Verarbeitung des Ankerstromsignals $I_a$ der Messeinrichtung 3 nachgeordnet - oder gemäß Fig. 5 in diese integriert - sowie dem (zweiten) Funktionsbaustein 6 vorgeordnet.

Zur Aufbereitung des Signals (Nutzsignal) $S_f$ für eine Überschusskraftbegrenzung, insbesondere zur Verwendung in einem Einklemmschutzsystem, wird dieses Nutzsignal $S_f$ einem Funktionsbaustein 19 zugeführt. Ein digitales Tiefpassfilter zur Unterdrückung der in diesem Signal $S_f$ enthaltenen Rippel des Gleichstrommotors 4 zusätzlich zu hochfrequenten Störungen im Ankerstromsignal $I_a$ und in der Motorspannung Um ist dann durch einen separaten Filterbaustein realisiert oder in den Tiefpassfilter 14 integriert. Durch eine nachfolgende Differenzierung der Gegeninduktionsspannung mittels des entsprechenden Funktionsbausteins 19 werden durch den Wechselanteil des Rippels im Signal $S_f$ enthaltene Schwankungen der Gegeninduktionsspannung E entfernt, so dass am Funktionsbaustein 19 ausgangsseitig ein gewünschtes drehzahlproportionales Nutz- oder ÜKB-Signal $S_n$ für eine ÜKB-Bewertung abgreifbar ist.

Durch die Berechnung der Gegeninduktionsspannung E kann somit ein drehzahlproportionales Signal aus dem Ankerstromsignal $I_a$ abgeleitet werden, dass einerseits zur vergleichsweise exakten Filterung der zu Positionserfassung zu detektierenden Stromrippel $I_r$ durch eine entsprechend optimale Nachführung der Filterfrequenz des Filterbausteins 2 herangezogen werden kann. Andererseits kann dieses Signal $S_f$ als Nutzsignal für ein beispielsweise bereits vorhandenes drehzahlbasiertes ÜKB-System herangezogen werden. Hierdurch ist der Rechenaufwand eines Systems mit rippelbasierter Positionserfassung und parallel hierzu eingesetztem drehzahlbasiertem ÜKB-System erheblich reduziert. Dadurch können vorhandene drehzahlbasierte ÜKB-Systeme in solche mit einer Stromauswertung in einfacher Weise übernommen werden.

Fig. 5 zeigt ein Blockschaltbild einer Messeinrichtung 3 zur Aufbereitung des Ankerstromsignals $I_a$ des Gleichstrommotors 4. Prinzipiell wird hierbei der Ankerstrom $I_a$ mittels eines Doppelrelais 20 und zwei Strommesswiderständen (Shunts) 21 und 22 erfasst. Diesen sind über jeweils einen Entkopplungswiderstand 23a bzw. 23b zwei aktive Filter (Filterbausteine) 24a und 24b nachgeordnet. Die aktiven Filter 24a und 24b umfassen jeweils einen Operationsverstärker 25a, 25b mit nachgeschaltetem Tiefpass 26a bzw. 26b. Das Schaltungsprinzip ist das eines Filters mit mehrfacher Gegenkopplung.

Die beiden Filter bzw. Filterbausteine 24a, 24b bildenden zwei parallel geschaltete Mess- oder Eingangskanäle und sind über die Dimensionierung deren Bauteile auf eine bestimmte Frequenz und eine gewünschte Verstärkung adaptierbar. Die somit parallel geschalteten Filter bzw. Eingangskanäle 24a, 24b sind über ein ODER-Glied 27 logisch miteinander verknüpft. Hierdurch ergibt sich eine Anordnung mit zwei Eingangskanälen und einem einzigen Ausgangskanal 28 für das Ankerstromsignal $I_a$.

In jedem der beiden Eingangskanäle kann ein weitestgehend beliebiger Offset $Off_a$, $Off_b$ eingekoppelt werden. Durch die Verwendung von zwei zusätzlichen Digital-IOs eines Mikrokontrollers kann jeder der beiden Offsets $Off_a$, $Off_b$ erneut auf "Null" gesetzt werden.

Insgesamt ist somit die Messeinrichtung 3 eine verknüpfte Verstärkerschaltung mit zwei aktiven Filtern 24a, 24b in der dargestellten Grundschaltung. In die Eingangskanäle 24a, 24b können Offsets $Off_a$ bzw. $Off_b$ eingekoppelt und wieder abgeschaltet werden.

Aufgrund der analogen Verknüpfung der Eingangskanäle (eingangsseitigen Messkanäle oder -pfade) 24a, 24b können die beiden Messpfade an einem AD-Wandler-Eingang des Mikrokontrollers ausgewertet werden. Durch die gesunkene Anzahl an Wandlerkanälen ist somit eine höhere Abtastrate des Mess- bzw. Ankerstromsignal $I_a$ möglich. Aufgrund der Verwendung eines aktiven Filters ist ein Filterverhalten höherer Ordnung mit relativ geringem Bauteileaufwand sowie einer gleichzeitigen Verstärkung des Ankerstromsignal $I_a$ ermöglicht.

Systembedingt ist zwar jeder der einzelnen Eingangskanäle 24a und 24b ausreichend, um den Ankerstrom in allen Zuständen darzustellen. Jedoch können auch im generatorischen Motorbetrieb negative Ströme auftreten. Um diese Zustände über die dargestellte Messschaltung der Messvorrichtung 3 erfassen zu können, werden an den Eingängen die Offsets $Off_a$, $Off_b$ eingekoppelt. Obwohl die beiden Verstärkerbausteine 25a, 25b parallelgeschaltet sind, kann das Ankerstromsignal $I_a$ in Form von zwei diskreten Kanälen abgegriffen und verarbeitet werden. Hierbei sollte allerdings physikalisch an einem anderen Punkt gemessen werden.

Da im dargestellten Messsystem der Messvorrichtung 3 jeweils nur eine der beiden Eingangspfade 24a, 24b ein gültiges Signal aufweisen kann, kann der nicht verwendete Eingang mit Hilfe eines Pins des Mikrokontrollers inaktiv geschaltet werden. Aufgrund der Verwendung eines beliebigen Offsets $Off_a$, $Off_b$ im Messwert kann somit ein beliebig negativer Strom gemessen und wiederum wahlweise der über einen der beiden Eingangskanäle 24a, 24b geführten Stromwert bzw. Stromverlauf an nur einem Ausgangskanal 28 gemessen werden.

Zur Verarbeitung eines Motorsignals $I_a$, Um eines Gleichstrommotors 4, insbesondere eines Verstellantriebs eines Kraftfahrzeugs, werden gemäß der Erfindung der Ankerstrom $I_a$ und die Motorspannung Um des Gleichstrommotors 4 erfasst und zur Ermittlung der Gegeninduktionsspannung E des Gleichstrommotors 4 herangezogen. Anhand der ermittelten Gegeninduktionsspannung E wird aus dem Ankerstromsignal $I_a$ ein - insbesondere drehzahlproportionales - Nutzsignal $S_f$, $S'_f$, und/oder $S_n$ zur Positionserfassung bzw. zur Bewertung einer Überschusskraftbegrenzung erzeugt.

Bezugszeichenliste

| 1 | Vorrichtung |
|---|---|
| 2 | Bandpass-/Frequenzfilter |
| 3 | Messeinrichtung |
| 4 | Gleichstrommotor |
| 5 | Signaleingang |
| 6 | (zweiter) Funktionsbaustein |
| 7 | Multiplizierer |
| 8 | Subtraktionsstufe |
| 9 | Steuereingang |
| 10 | (erster) Funktionsbaustein |
| 11 | Subtraktionsstufe |
| 12 | Multiplizierer |
| 13 | Multiplizierer |
| 14 | Tiefpassfilter |
| 15 | Signalausgang |
| 16 | Funktions-/Digitalisierungsbaustein |
| 17 | Zählerausgang |
| 18 | Tiefpass-/Antialising-Filter |
| 19 | Funktionsbaustein |
| 20 | Doppelrelais |
| 21 | Strommesswiderstand/Shunt |
| 22 | Strommesswiderstand/Shunt |
| 23a,b | Entkopplungswiderstand |
| 24a,b | Filter/Eingangskanal |
| 25a,b | Operationsverstärker |
| 26a,b | Tiefpass |
| 27 | ODER-Glied |
| 28 | Ausgangskanal |
| $I_a$ | Ankerstrom/-signal |

$I_f$      Filtereingangssignal

$I_r$      Filterausgangssignal

$S_f$      Steuer-/Nutzsignal

$S_f$      Steuersignal

$S_n$      Nutz-/ÜKB-Signal

Um      Motorspannung/-spannungssignal


**Patentansprüche**

1.  Verfahren zur Verarbeitung eines Motorsignals ($I_a$, Um) eines Gleichstrommotors (4), insbesondere eines Verstellantriebs eines Kraftfahrzeugs, bei dem der Ankerstrom ($I_a$) und die Motorspannung ($U_m$) des Gleichstrommotors (4) erfasst und zur Ermittlung der Gegeninduktionsspannung (E) des Gleichstrommotors (4) herangezogen werden, und bei dem anhand der ermittelten Gegeninduktionsspannung (E) aus dem Ankerstromsignal ($I_a$) ein drehzahlproportionales Nutzsignal ($S_f$, $S_{ÜKB}$) erzeugt wird,
    **gekennzeichnet durch**
    ein steuerbares Frequenzfilter (2), dem ein aus dem Ankerstrom ($I_a$) und aus der Motorspannung ($U_m$) abgeleitetes Filtereingangssignal ($I_f$) und ein aus der Gegeninduktionsspannung (E) ermitteltes Steuersignal ($S'_f$) zugeführt wird, und das ein drehzahlproportionales Ausgangssignal ($I_r$) erzeugt.

2.  Verfahren nach Anspruch 1,
    **dadurch gekennzeichnet,**
    **dass** die Gegeninduktionsspannung (E) aus der erfassten Motorspannung (Um) und dem Produkt aus dem erfassten Ankerstrom ($I_a$) und dem Ankerwiderstand ($R_a$) ermittelt wird.

3.  Verfahren nach Anspruch 2,
    **dadurch gekennzeichnet,**
    **dass** die Motorspannung ($U_m$) mit einem tiefpasscharakteristischen Faktor (A) gewichtet und daraus ein Korrektursignal ($I_e$) abgeleitet wird, wobei das Filtereingangssignal ($I_f$) aus der Differenz des Ankerstroms ($I_a$) und dem Korrektursignal ($I_e$) Motorspannung ($U_m$) erzeugt wird.

4.  Verfahren nach einem der Ansprüche 1 bis 3,
    **dadurch gekennzeichnet,**
    **dass** das Nutzsignal ($S_f$) einem Tiefpassfilter (14) zugeführt wird.

5.  Verfahren nach einem der Ansprüche 1 bis 4,
    **dadurch gekennzeichnet,**
    **dass** dem steuerbaren Frequenzfilter (2) ein tiefpassgefiltertes Steuersignal ($S'_f$) zugeführt wird.

6.  Verfahren nach einem der Ansprüche 1 bis 5,
    **dadurch gekennzeichnet,**
    **dass** der Ankerstrom ($I_a$) in einem Tiefpassfilter (17) vorgefiltert wird.

7.  Verfahren nach einem der Ansprüche 1 bis 8,
    **dadurch gekennzeichnet,**
    **dass** der Ankerstrom ($I_a$) mittels zwei Stromerfassungsgliedem (21,22) erfasst und einem Filterbaustein mit zwei, vorzugsweise logisch verknüpften, Eingangskanälen (24a,24b) und einem einzelnen Ausgangskanal (28) zugeführt wird.

8.  Verfahren nach Anspruch 7,
    **dadurch gekennzeichnet,**
    **dass** die beiden Eingangskanäle (24a,24b) aus zwei, insbesondere parallel geschalteten und/oder aktiven, Filtern gebildet werden.

9. Vorrichtung (1) zur Verarbeitung des Ankerstroms ($I_a$) eines Gleichstrommotors (4), insbesondere eines Verstellantriebs eines Kraftfahrzeugs, mit einer Messeinrichtung (3) zur Erfassung des Ankerstroms ($I_a$) und der Motorspannung ($U_m$) des Gleichstrommotors (2), und mit einem ersten Funktionsbaustein (10) zur Ermittlung eines drehzahlproportionalen Nutzsignals ($S_f$) aus der Gegeninduktionsspannung (E) des Gleichstrommotors (4),
   **gekennzeichnet durch**
   ein steuerbares Frequenzfilter (2) mit einem Steuereingang (9) und mit einem Signaleingang (5) sowie mit einem Signalausgang (15), wobei an den Steuereingang (9) das drehzahlproportionale Nutzsignal ($S_f$) als Steuersignal ($S'_f$) und an den Signaleingang (5) ein aus dem Ankerstrom ($I_a$) und der Motorspannung ($U_m$) abgeleitetes Filtereingangssignal ($I_f$) geführt sind, und wobei am Signalausgang (15) ein anhand der im Filtereingangssignal ($I_f$) enthaltenen Stromrippel erzeugtes Ausgangssignal ($I_r$) abgreifbar ist.

10. Vorrichtung (1) nach Anspruch 9,
    **gekennzeichnet durch**
    ein ausgangsseitig an den Signaleingang (5) des Frequenzfilters (2) geführten zweiten Funktionsbaustein (6) zur Erzeugung des Filtereingangssignals ($I_f$).

11. Vorrichtung (1) nach Anspruch 10,
    **dadurch gekennzeichnet,**
    **dass** der zweite Funktionsbaustein (6) ein zur Gegeninduktionsspannung (E) proportionales Stromsignal ($I_f$) erzeugt.

12. Vorrichtung (1) nach Anspruch 10 oder 11,
    **dadurch gekennzeichnet,**
    **dass** der zweite Funktionsbaustein (6) die Funktionalität einer Subtraktionsstufe (8) zur Ermittlung der Differenz zwischen dem Ankerstromsignal ($I_a$) und einem Korrektursignal ($I_e$) mit Tiefpasscharakteristik aufweist.

13. Vorrichtung (1) nach einem der Ansprüche 10 bis 12,
    **dadurch gekennzeichnet,**
    **dass** der zweite Funktionsbaustein (6) die Funktionalität eines Multiplizierers gemäß der Beziehung $I_e = A \cdot Um$ aufweist, wobei $A = R_a^{-1}/(1 + s\, L_a\, R_a^{-1})$ eine Tiefpassfunktion erster Ordnung entspricht und s die zeitliche Ableitung des Ankerstroms ($dI_a/dt$) sowie $R_a$ der ohmsche Wicklungswiderstand und $L_a$ die Wicklungsinduktivität des Gleichstrommotors (4) sind.

14. Vorrichtung (1) nach einem der Ansprüche 9 bis 13,
    **dadurch gekennzeichnet,**
    **dass** die Messeinrichtung (3) zwei Stromerfassungsglieder (21,22) und einen aktiven Filter mit zwei Eingangskanälen (24a,24b) für das Ankerstromsignal ($I_a$) einen einzelnen Ausgangskanal (28) aufweist.

15. Vorrichtung (1) nach Anspruch 14,
    **dadurch gekennzeichnet,**
    **dass** die beiden Eingangskanäle (24a,24b), insbesondere über eine logische ODER-Glied (27), logisch verknüpft, vorzugsweise über die logische Verknüpfung in den Ausgangskanal (28) geführt, sind.

**Claims**

1. Method for processing a motor signal ($I_a$, $U_m$) of a DC motor (4), in particular of a servo drive of a motor vehicle, in which the armature current ($I_a$) and the motor voltage ($U_m$) of the DC motor (4) are detected and are used to determine the back electromotive force (E) of the DC motor (4), and in which the determined back electromotive force (E) is used to generate a useful signal ($S_f$, $S_{ÜKB}$), which is speed-proportional, from the armature current signal ($I_a$), **characterised by** a controllable frequency filter (2), to which a filter input signal ($I_f$) derived from the armature current ($I_a$) and from the motor voltage ($U_m$), and a control signal ($S'_f$) determined from the back electromotive force (E) are fed, and which generates a speed-proportional output signal ($I_r$).

2. Method according to claim 1, **characterised in that** the back electromotive force (E) is determined from the detected motor voltage ($U_m$) and from the product of the detected armature current ($I_a$) and the armature resistance ($R_a$).

3. Method according to claim 2, **characterised in that** the motor voltage ($U_m$) is weighted with a low-pass filter characteristic factor (A), and a correction signal ($I_e$) is derived therefrom, the filter input signal ($I_f$) being generated from the difference between the armature current ($I_a$) and the correction signal ($I_e$) of the motor voltage ($U_m$).

4. Method according to any one of claims 1 to 3, **characterised in that** the useful signal ($S_f$) is fed to a low-pass filter (14).

5. Method according to any one of claims 1 to 4, **characterised in that** a control signal ($S'_f$) filtered using a low-pass filter is fed to the controllable frequency filter (2).

6. Method according to any one of claims 1 to 5, **characterised in that** the armature current ($I_a$) is prefiltered in a low-pass filter (17).

7. Method according to any one of claims 1 to 8, **characterised in that** the armature current ($I_a$) is detected by two current detection elements (21, 22) and is fed to a filter module having two, preferably logically coupled, input channels (24a, 24b) and a single output channel (28).

8. Method according to claim 7, **characterised in that** the two input channels (24a, 24b) are formed from two filters, which in particular are connected in parallel and/or are active.

9. Apparatus (1) for processing the armature current ($I_a$) of a DC motor (4), in particular of a servo drive of a motor vehicle, said apparatus comprising a measuring device (3) for detecting the armature current ($I_a$) and the motor voltage ($U_m$) of the DC motor (2), and comprising a first functional module (10) for determining a useful signal ($S_f$), which is speed-proportional, from the back electromotive force (E) of the DC motor (4), **characterised by** a controllable frequency filter (2) having a control input (9), a signal input (5), and a signal output (15), the speed-proportional useful signal ($S_f$) being passed to the control input (9) as a control signal ($S'_f$), and a filter input signal ($I_f$), which is derived from the armature current ($I_a$) and the motor voltage ($U_m$), being passed to the signal input (5), and an output signal ($I_r$), which is generated using the current ripple contained in the filter input signal ($I_f$), being tappable at the signal output (15).

10. Apparatus (1) according to claim 9, **characterised by** a second functional module (6), which is connected on the output side to the signal input (5) of the frequency filter (2), for generating the filter input signal ($I_f$).

11. Apparatus (1) according to claim 10, **characterised in that** the second functional module (6) generates a current signal ($I_f$) which is proportional to the back electromotive force (E).

12. Apparatus (1) according to either claim 10 or claim 11, **characterised in that** the second functional module (6) functions as a subtraction stage (8) for determining the difference between the armature current signal ($I_a$) and a correction signal ($I_e$) with low-pass filter characteristic.

13. Apparatus (1) according to any one of claims 10 to 12, **characterised in that** the second functional module (6) functions as a multiplier in accordance with the relationship $I_e = A \cdot U_m$, $A = R_a^{-1}/(1 + s\, L_a\, R_a^{-1})$ corresponding to a first-order low-pass filter function, s being the time derivative of the armature current ($dI_a/dt$), $R_a$ being the ohmic winding resistance of the DC motor (4), and $L_a$ being the winding inductance of the DC motor (4).

14. Apparatus (1) according to any one of claims 9 to 13, **characterised in that** the measuring device (3) comprises two current detection elements (21, 22) and an active filter having two input channels (24a, 24b) for the armature current signal ($I_a$) and a single output channel (28).

15. Apparatus (1) according to claim 14, **characterised in that** the two input channels (24a, 24b) are logically connected, in particular via a logical OR element (27), and are passed into the output channel (28), preferably via the logical coupling.

**Revendications**

1. Procédé de traitement d'un signal de moteur ($I_a$, $U_m$) d'un moteur à courant continu (4), notamment d'un entraînement de réglage d'un véhicule automobile, selon lequel on relève le courant d'induit ($I_a$) et la tension de moteur ($U_m$) du moteur à courant continu (4) et on les utilise pour déterminer la tension d'induction mutuelle ou force électromotrice (E) du moteur à courant continu (4), et selon lequel au regard de la force contre-électromotrice (E) déterminée, on produit, à partir du signal de courant d'induit ($I_a$), un signal utile ($S_f$, $S_{\ddot{U}KB}$) proportionnel à la vitesse de rotation,

**caractérisé par** un filtre de fréquence (2) qui peut être commandé et auquel on amène un signal d'entrée de filtre ($I_f$) dérivé du courant d'induit ($I_a$) et de la tension de moteur ($U_m$), ainsi qu'un signal de commande ($S'_f$) déterminé à partir de la force électromotrice (E), et qui produit un signal de sortie ($I_r$) proportionnel à la vitesse de rotation.

**2.** Procédé selon la revendication 1,
**caractérisé en ce que** la force électromotrice (E) est déterminée à partir de la tension de moteur ($U_m$) relevée et du produit du courant d'induit ($I_a$) relevé et de la résistance d'induit ($R_a$).

**3.** Procédé selon la revendication 2,
**caractérisé en ce que** la tension de moteur ($U_m$) est pondérée par un facteur (A) à caractéristique passe-bas, et on en dérive un signal de correction ($I_e$), le signal d'entrée de filtre ($I_f$) étant produit à partir de la différence du courant d'induit ($I_a$) et du signal de correction ($I_e$) de la tension de moteur ($U_m$).

**4.** Procédé selon l'une des revendications 1 à 3,
**caractérisé en ce que** l'on amène le signal utile ($S_f$) à un filtre passe-bas (14).

**5.** Procédé selon l'une des revendications 1 à 4,
**caractérisé en ce que** l'on amène au filtre de fréquence (2) pouvant être commandé, un signal de commande ($S'_f$) ayant été soumis à un filtre passe-bas.

**6.** Procédé selon l'une des revendications 1 à 5,
**caractérisé en ce que** le courant d'induit ($I_a$) est préfiltré dans un filtre passe-bas (17).

**7.** Procédé selon l'une des revendications 1 à 6,
**caractérisé en ce que** l'on relève le courant d'induit ($I_a$) au moyen de deux organes d'acquisition de données (21, 22), et on l'amène à un bloc de filtre comprenant deux canaux d'entrée (24a, 24b) de préférence combinés sur le plan logique, et un seul canal de sortie (28).

**8.** Procédé selon la revendication 7,
**caractérisé en ce que** les deux canaux d'entrée (24a, 24b) sont formés par deux filtres, notamment montés et/ou actifs en parallèle.

**9.** Dispositif (1) pour le traitement du courant d'induit ($I_a$) d'un moteur à courant continu (4), notamment d'un entraînement de réglage d'un véhicule automobile, comprenant un dispositif de mesure (3) pour relever le courant d'induit ($I_a$) et la tension de moteur ($U_m$) du moteur à courant continu (4), et comprenant également un premier bloc fonctionnel (10) pour la détermination d'un signal utile ($S_f$) proportionnel à la vitesse de rotation, à partir de la force électromotrice (E) du moteur à courant continu (4),
**caractérisé par** un filtre de fréquence (2) pouvant être commandé et comportant une entrée de commande (9) et une entrée de signal (5) ainsi qu'une sortie de signal (15), filtre dans lequel est appliqué à l'entrée de commande (9), le signal utile ($S_f$) proportionnel à la vitesse de rotation en tant que signal de commande ($S'_f$), et à l'entrée de signal (5), un signal d'entrée de filtre ($I_f$) dérivé du courant d'induit ($I_a$) et de la tension de moteur ($U_m$), et dans lequel au niveau de la sortie de signal (15) peut être prélevé un signal de sortie ($I_r$) produit l'aide des oscillations de courant contenues dans le signal d'entrée de filtre ($I_f$).

**10.** Dispositif (1) selon la revendication 9, **caractérisé par** un deuxième bloc fonctionnel (6) destiné à produire le signal d'entrée de filtre ($I_f$), et dont la sortie est menée à l'entrée de signal (5) du filtre de fréquence (2).

**11.** Dispositif (1) selon la revendication 10,
**caractérisé en ce que** le deuxième bloc fonctionnel (6) produit un signal de courant ($I_f$) proportionnel à la force électromotrice (E).

**12.** Dispositif (1) selon la revendication 10 ou la revendication 11,
**caractérisé en ce que** le deuxième bloc fonctionnel (6) présente la fonctionnalité d'un étage soustracteur (8) pour déterminer la différence entre le signal de courant d'induit ($I_a$) et un signal de correction ($I_e$) à caractéristique passe-bas.

**13.** Dispositif (1) selon l'une des revendications 10 à 12,
**caractérisé en ce que** le deuxième bloc fonctionnel (6) présente la fonctionnalité d'un multiplicateur conformément

à la relation $I_e = A.U_m$, $A = R_a^{-1}/ (1+sL_aR_a^{-1})$ correspondant à une fonction passe-bas de premier ordre, et s étant la dérivée par rapport au temps du courant d'induit $(dI_a/dt)$, $R_a$ étant la résistance ohmique d'enroulement et $L_a$ l'inductance d'enroulement du moteur à courant continu (4).

**14.** Dispositif (1) selon l'une des revendications 9 à 13.
**caractérisé en ce que** le dispositif de mesure (3) comprend deux organes d'acquisition de courant (21, 22) et un filtre actif comprenant deux canaux d'entrée (24a, 24b) pour le signal de courant d'induit $(I_a)$ et un seul canal de sortie (28).

**15.** Dispositif (1) selon la revendication 14,
**caractérisé en ce que** les deux canaux d'entrée (24a, 24b) sont combinés sur le plan logique, notamment par l'intermédiaire d'un organe logique OU (27), et sont menés, de préférence par l'intermédiaire de la combinaison logique, au canal de sortie (28).

FIG. 1

FIG. 2

FIG. 3

**FIG. 4**

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5048115 A
- DD 254254 A1
- US 4924166 A
- DE 19511307 C1
- DE 19834108 A1
- EP 0579015 B1
- EP 1037052 B1
- DE 60005727 T2
- US 20080100245 A1